# EUROPEAN PATENT APPLICATION

(11) **EP 4 776 449 A1**
(43) Date of publication of application: **15.07.2026**
(21) Application number: 25222555.2
(22) Date of filing: 11.12.2025
(51) Int. Cl.: H02B 11/24

(54) **SWITCHGEAR SYSTEM WITH INDEPENDENTLY MOVABLE AND LOCKABLE SHUTTER MECHANISM**

(30) Priority: 13.01.2025 US 202519018369
(71) Applicant: Eaton Intelligent Power Limited, Dublin 4, D04 Y0C2 (IE)
(72) Inventor: TELI, Kunal Satyavijay, Mumbai (IN); DHULEKAR, Dipak, Pune (IN); MALI, Rohit, Sangli (IN); Rakus, Paul R., Coraopolis (US)
(74) Representative: Collingwood-Pierce, Alexandra Isobel Seymour

(57) **Abstract**

A shutter assembly includes a slider slidable in a first direction relative to a cassette, and first and second arms coupled the slider and the cassette that are independently slidable in the first direction relative to the slider and the cassette and pivotable relative to the slider and the cassette, and shutter plates coupled to the arms such that are movable between a closed condition and an open condition wherein the apertures of the shutter plates are aligned with one another and the of terminals of the cassette. The slider includes a locking portion structured to enable the slider to be padlocked to a member extending from the top surface of the cassette. The shutter assembly also includes a latching mechanism for latching the shutter assembly in the open condition.

## Description

### FIELD OF THE INVENTION

The disclosed concept relates generally to switchgear systems, and, in particular, to an electrical switchgear system having an independently movable and lockable shutter mechanism for protecting against accidental contact with terminal stabs.

### BACKGROUND OF THE INVENTION

An electric switchboard, also known as a switchgear system, is a piece of equipment that distributes electric power from one or more sources of supply to several smaller load circuits. It generally comprises an assembly of one or more panels, each of which contains switching devices, such as switches, fuses or circuit breakers, and/or other control components for the protection and control of circuits fed from the switchboard.

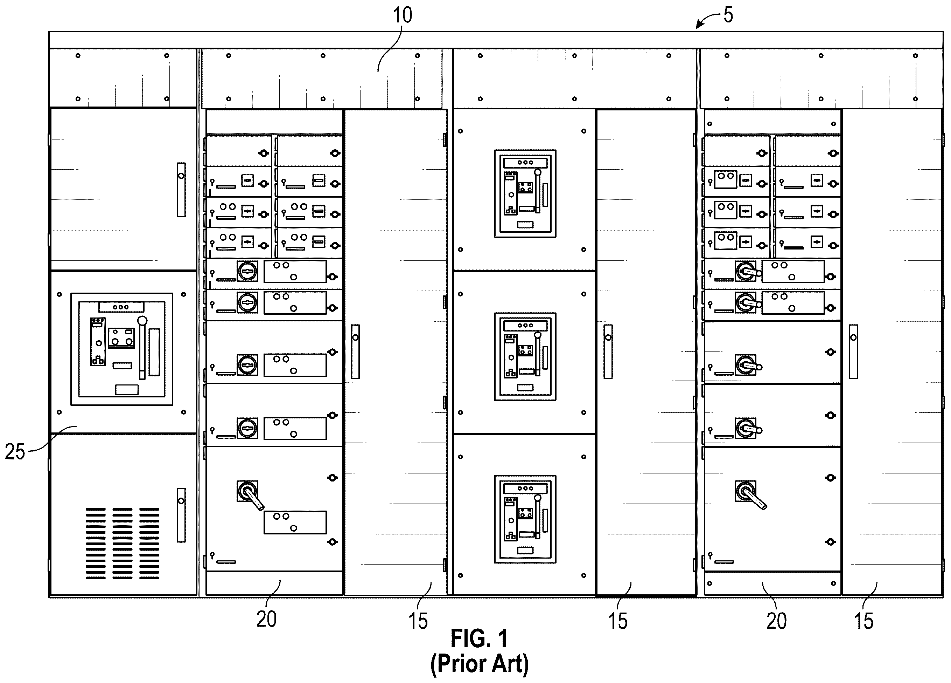

FIG. 1 is s a schematic diagram of an exemplary known switchboard 5. Switchboard 5 include cabinets or enclosures that house multiple sections and compartments for receiving and holding the various switching devices and other components of switchboard 5. As seen in FIG. 1, the exemplary switchboard 5 includes a main busbar compartment 10 for enclosing a common power busbar that fees the components of switchboard 5, a number of cabling sections for enclosing the cabling of switchboard 5, a number MCC sections 20 for holding motor control center (MCC) units of switchboard 5, and a drawout circuit breaker section 25 for holding a drawout air circuit breaker and associated cassette.

A drawout circuit breaker is a type of circuit breaker assembly that allows for the maintenance, testing, and interchanging of circuit breakers without taking the entire switchboard offline. In a drawout circuit breaker assembly, the breaker can be removed like a drawer from a cabinet, making it easier to handle than a bolt-in circuit breaker. A typical drawout circuit breaker assembly includes a cassette and a drawout breaker. The cassette is received and held within the switchboard (e.g., within drawout circuit breaker section 25 shown in FIG. 1), and includes a number of terminals that are coupled to the main busbar of the switchboard (e.g., the common power busbar held within main busbar compartment 10 shown in FIG. 1). The drawout breaker is an air circuit breaker that is structured and configured to be removably and slidably received in the cassette in a manner that couples the separable contacts of the air circuit breaker to the cassette terminals and thus to the main busbar.

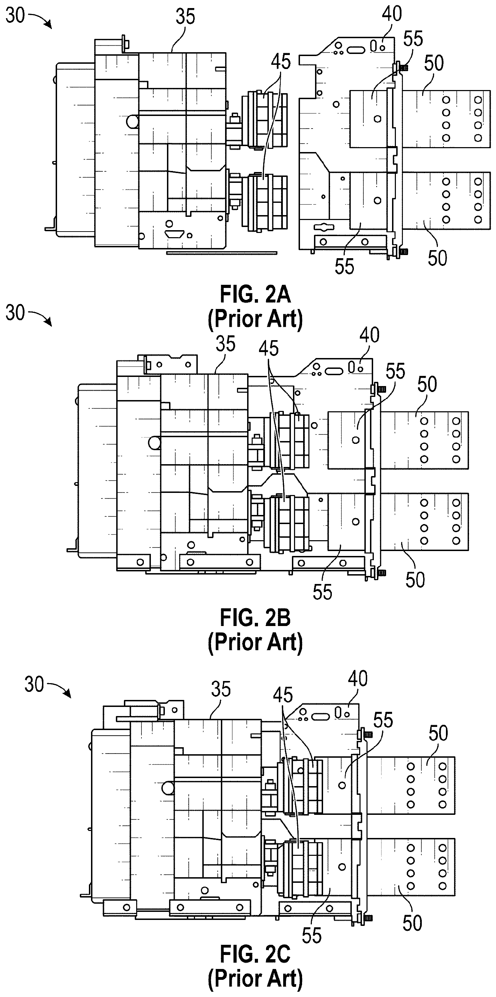

FIGS. 2A, 2B and 2C are schematic diagrams that illustrate the racking-in procedure for a typical known drawout circuit breaker assembly 30 having a drawout breaker 35 and a cassette 40. Drawout breaker 30 includes cluster contacts 45 that are coupled to the separable contacts of drawout breaker 30. Cassette 40 includes terminals 50 having terminal stabs 55. Terminals 50 are coupled to the main busbar (e.g., the common power busbar held within main busbar compartment 10 shown in FIG. 1). FIG. 2A shows drawout circuit breaker assembly 30 in the fully disconnected condition, FIG. 2B shows drawout circuit breaker assembly 30 in the test condition wherein a secondary connection is made to drawout breaker 35, and FIG. 2C shows drawout circuit breaker assembly 30 in the fully connected condition wherein each of the terminals 50 of cassette 40 is connected to a respective cluster contact 45 of drawout breaker 35.

As described above, drawout breaker 35 can be removed from cassette 40 during maintenance. However, when so removed, without protection, the live terminal stabs 55 of cassette 40 would be exposed, thus presenting a danger to maintenance personnel or other individuals. The exposed live terminal stabs 55 would also present a risk of a phase short occurring as a result of contact with a tool or other metallic parts inside cassette 40. In order to address this problem, drawout circuit breaker assemblies have been designed with cassettes that include a protection mechanism in the form of shutter assembly that automatically covers the live terminal stabs during maintenance to prevent access and exposure thereto.

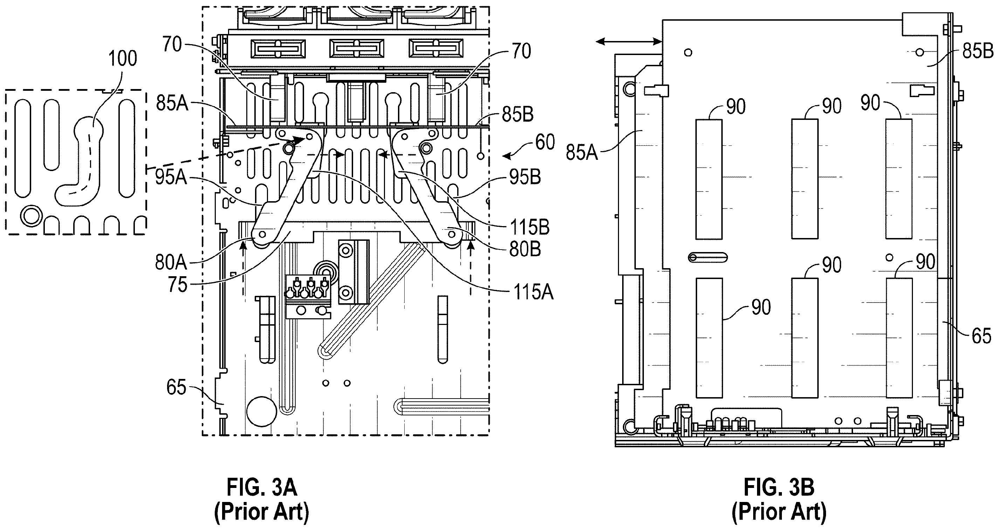

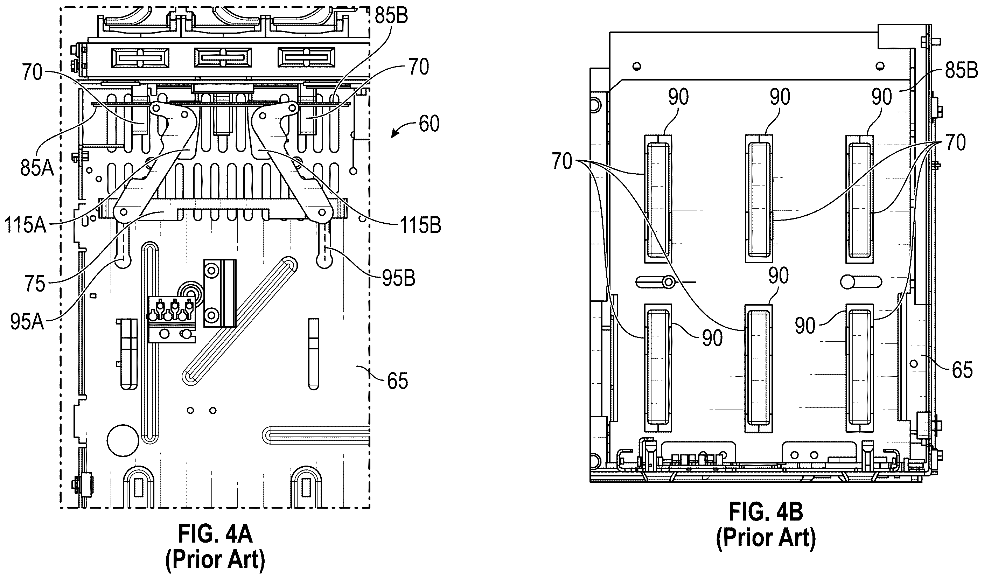

FIGS. 3A, 3B, 4A, 4B, and 5 illustrate one such prior art shutter assembly 60 provided with an exemplary prior art cassette 65. FIGS. 3A and 4A are top plan views of cassette 65 and shutter assembly 60, and FIGS. 3B and 4B are front elevational views of cassette 65 and shutter assembly 60 (i.e., long into cassette 65). In addition, FIGS. 3A and 3B show shutter assembly 60 in the closed condition wherein terminal stabs 70 are covered, and FIGS. 4A and 4B show shutter assembly 60 in the open condition wherein terminal stabs 70 are exposed. As seen in FIGS. 3A and 4A, shutter assembly 60 includes a slider 75 that is slidably coupled to a bottom surface of cassette 65. Shutter assembly 60 also includes a first arm 80A and a second arm 80B each having a proximal end that is pivotably coupled to the top of slider 75 and received in guide slots 95A and 95B provided in the bottom surface of cassette 65. The distal end of first arm 80A is slidably received within a guide slot 100 provided in the bottom surface of cassette 65 (see enlarged portion of FIG. 3A) through an associated plate member 115A and a distal end of second arm 80B is slidably received within a similar guide slot provided in the bottom surface of cassette 65 through an associated plate member 115B. A first shutter plate 85A is connected to plate member 115A coupled to the distal end first arm 85A and a second shutter plate 85B is connected to plate member 115B coupled to the distal end of second arm 85B. Second shutter plate 85B is positioned in front of first shutter plate 85A such that each is able to slide relative to one another in the direction of the double arrows shown in FIG. 3B. In addition, both first shutter plate 85A and second shutter plate 85B include a plurality of apertures 90. Apertures 90 are configured such that they are not aligned with one another, and thus will block terminal stabs 70, when shutter assembly 60 is in the closed condition as shown in FIG. 3B, and such that they are aligned with one another and with the positions of terminal stabs 70 as a result of the sliding of shutter plates 85A, 85B when shutter assembly 60 is moved to the open condition as described herein and as shown in FIG. 4B. In addition, as described in more detail below, shutter assembly 60 is structured and configured such that when going from the closed condition to the open condition, shutter plates 85A and 85B will move toward terminal stabs 70 (as a result of the sliding of slider 75) such that terminal stabs 70 are received through the aligned apertures 90.

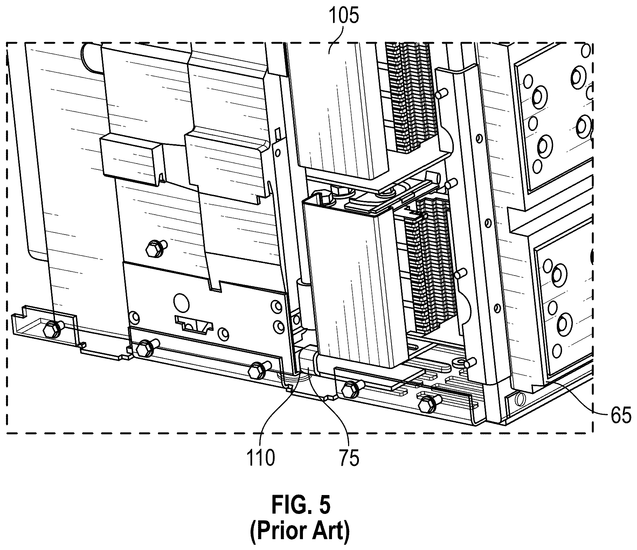

In operation, shutter assembly 60 begins in the closed condition. Thereafter, when exemplary drawout breaker 105 is inserted into cassette 65, a portion of each side of drawout breaker 105 will engage slider 75 at an actuation point 110 as shown in FIG. 5. This is also shown by the arrows provided in FIG. 3A. When the drawout breaker 105 is pushed in the direction of the vertical arrows provided in FIG. 3A by pushing drawout breaker 105, it will initially cause arms 80A and 80B to move within guide slots 95A and 95B and to pivot, thereby causing the distal ends of arms 80A and 80B, plate members 115A and 115B, and the attached slider plates 85A and 85B to move inwardly (within guide slots 100) in the direction of the horizontal arrows provided in FIG. 3A. As described above, this will cause shutter plates 85A and 85B to slide and the apertures 90 therein to be aligned with one another and with terminal stabs 70. Furthermore, as drawout breaker 105 is continued to be pushed, slider 70 will move further along and within guide slots 95A and 95B and will thereby cause arms 80A and 80B, plate members 115A and 115B, and slider plates 85A and 85B to be pushed toward terminal stabs 70 to the point wherein terminal stabs 70 are received within aligned apertures 90 as shown in FIGS. 4A and 4B. The process of moving shutter assembly 60 from the closed condition to the open condition may also be performed manually by an operator pushing slider 75.

While shutter assembly 60 described above provides a mechanism for covering exposed terminal stabs 70, a safety issue still exists. In particular, there is no mechanism which allows shutter assembly 60 to be locked in the closed condition and, as a result, unauthorized personnel can open shutter assembly 60 and be exposed the live terminal stabs 70. This also presents a risk of a phase short as described above. In addition, it is difficult for an operator to keep shutter assembly 60 the open condition for performing a phase check or other maintenance.

### SUMMARY OF THE INVENTION

These needs, and others, are met by a shutter assembly for a drawout circuit breaker assembly including a drawout breaker and a cassette having a number of terminals. The shutter assembly includes a slider coupled to the cassette that has a first side and a second side, wherein the slider is slidable in a first direction relative to the cassette, a first arm coupled to the first side of the slider and the cassette and being independently slidable in the first direction relative to the slider and the cassette and pivotable relative to the slider and the cassette, a second arm coupled to the second side of the slider and the cassette and being independently slidable in the first direction relative to the slider and the cassette and pivotable relative to the slider and the cassette, a first shutter plate having a plurality of first apertures coupled to the first arm such that the first shutter plate is independently movable in the first direction and a second direction transverse to the first direction responsive to movement of either or both of the slider and the first arm, and a second shutter plate having a plurality of second apertures coupled to the second arm such that the second shutter plate is independently movable in the first direction and the second direction responsive to movement of either or both of the slider and the second arm. The first shutter plate and the second shutter plate are movable between a closed condition wherein the first apertures and the second apertures are not aligned with one another and an open condition wherein the first apertures and the second apertures are aligned with one another and the number of terminals. The first side of the slider includes a locking portion structured to enable the slider to be padlocked to a member extending from the top surface of the cassette. The shutter assembly may also include a spring-operated latching mechanism for latching the shutter assembly in the open condition in cooperation with a slot provided in the slide.

In one non-limiting embodiment, the first arm may have a first distal end and a first proximal end, the first distal end being coupled to the first side of the slider and the cassette in a manner wherein the first distal end is independently slidable in the first direction relative to the first side of the slider and the cassette and is pivotable relative to the first side of the slider and the cassette about a first axis normal to a top surface of the cassette, the first proximal end being coupled to the cassette in a manner wherein the first proximal end is slidable in the first direction relative to the cassette and in the second direction relative to the cassette and is pivotable relative to the cassette about a second axis normal to the top surface of the cassette. Similarly, the second arm may have a second distal end and a second proximal end, the second distal end being coupled to the second side of the slider and the cassette in a manner wherein the second distal end is independently slidable in the first direction relative to the second side of the slider and the cassette and is pivotable relative to the second side of the slider and the cassette about a third axis normal to the top surface of the cassette, the second proximal end being coupled to the cassette in a manner wherein the second proximal end is slidable in the first direction relative to the cassette and in the second direction relative to the cassette and is pivotable relative to the cassette about a fourth axis normal to the top surface of the cassette; and wherein the first shutter plate is coupled to the first proximal and the second shutter plate is coupled to the second proximal end.

In another non-limiting embodiment, the first arm may include a first protruding member positioned between the first proximal end and the first distal end and the second arm may include a second protruding member positioned between the second proximal end and the second distal end, and wherein the slider includes a middle portion having a first tab member and a second tab member, wherein the first protruding member is received under the first tab and the second protruding member is received under the second tab. The slider may also include a middle portion having a raised block structured to engage the first and second protruding members Also, the first side of the slider may include a first slot and the second side of the slider may include a second slot, and wherein the first proximal end of the first arm is structured to slide within the first slot and the second proximal end of the second arm is structured to slide within the second slot.

### BRIEF DESCRIPTION OF THE DRAWINGS

A full understanding of the invention can be gained from the following description of the preferred embodiments when read in conjunction with the accompanying drawings in which:
FIG. 1 is s a schematic diagram of an exemplary prior art switchboard
FIGS. 2A, 2B and 2C are schematic diagrams that illustrate the racking-in procedure for a typical prior art drawout circuit breaker assembly;
FIGS. 3A, 3B, 4A, 4B, and 5 illustrate a prior art shutter assembly provided with an exemplary prior art drawout breaker and cassette;
FIG. 6 is a schematic diagram of a shutter assembly according to an exemplary embodiment of the disclosed concept;
FIG. 7 is a schematic diagram of a slider according to a first exemplary embodiment that is a part of the shutter assembly of FIG. 6.
FIG. 8 is a schematic diagram showing the shutter assembly of FIG. 6 coupled to a cassette;
FIG. 9 is a schematic diagram of a slider according to a second exemplary embodiment that may be a part of the shutter assembly of FIG. 6;
FIGS. 10A-10D illustrate the movement of the shutter assembly of the disclosed concept between a number of different positions;
FIGS. 11A, 11B and 11C illustrate the manner in which the shutter assembly of the disclosed concept may be padlocked;
FIGS. 12A-12C are schematic diagrams of a first latch mechanism embodiment according to the disclosed concept;
FIGS. 13A-13I are schematic diagrams of a second latch mechanism embodiment according to the disclosed concept; and
FIGS. 14A-14B are schematic diagrams of a third latch mechanism embodiment according to the disclosed concept.

### DETAILED DESCRIPTION OF THE INVENTION

As used herein, the singular form of "a", "an", and "the" include plural references unless the context clearly dictates otherwise.

As used herein, the statement that two or more parts or components are "coupled" shall mean that the parts are joined or operate together either directly or indirectly, i.e., through one or more intermediate parts or components, so long as a link occurs.

As used herein, "directly coupled" means that two elements are directly in contact with each other.

As used herein, the statement that two or more parts or components "engage" one another shall mean that the parts exert a force against one another either directly or through one or more intermediate parts or components.

As used herein, the term "number" shall mean one or an integer greater than one (i.e., a plurality).

Directional phrases used herein, such as, for example and without limitation, top, bottom, left, right, upper, lower, front, back, and derivatives thereof, relate to the orientation of the elements shown in the drawings and are not limiting upon the claims unless expressly recited therein.

The disclosed concept will now be described, for purposes of explanation, in connection with numerous specific details in order to provide a thorough understanding of the disclosed concept. It will be evident, however, that the disclosed concept can be practiced without these specific details without departing from the spirit and scope of this innovation.

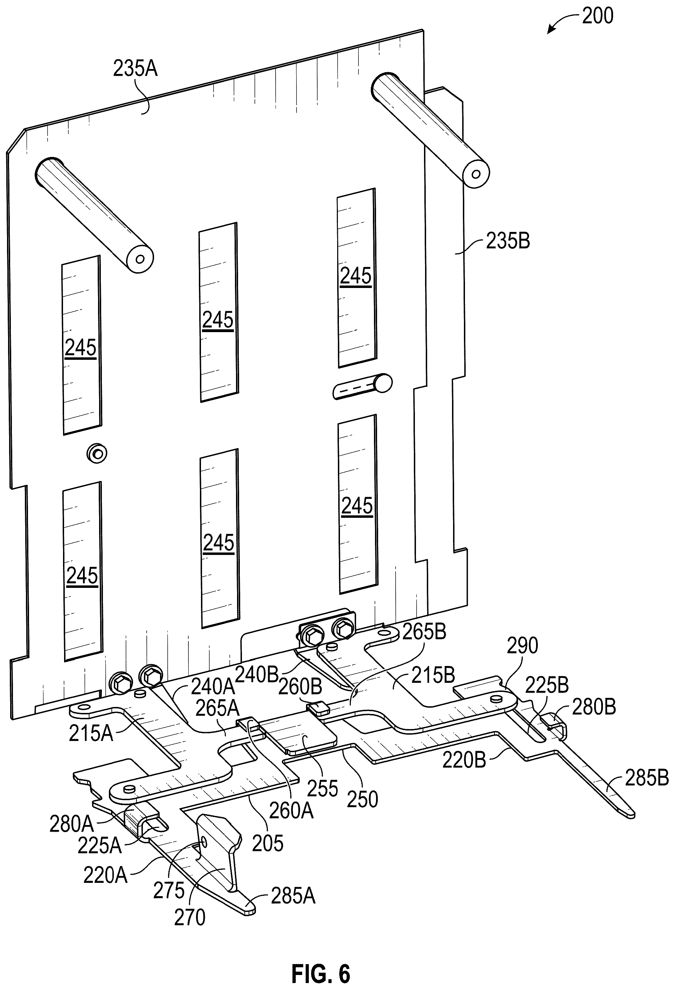

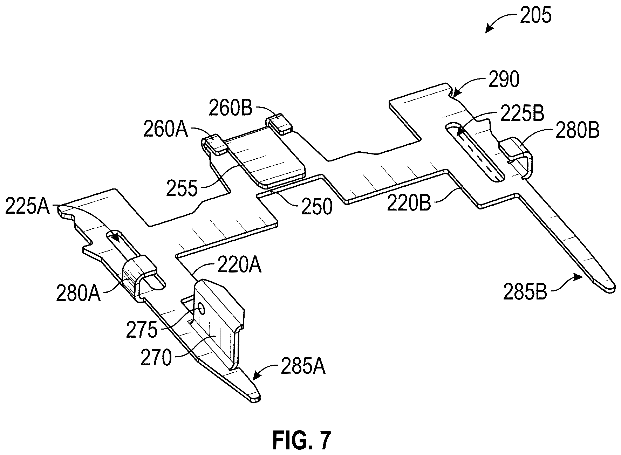

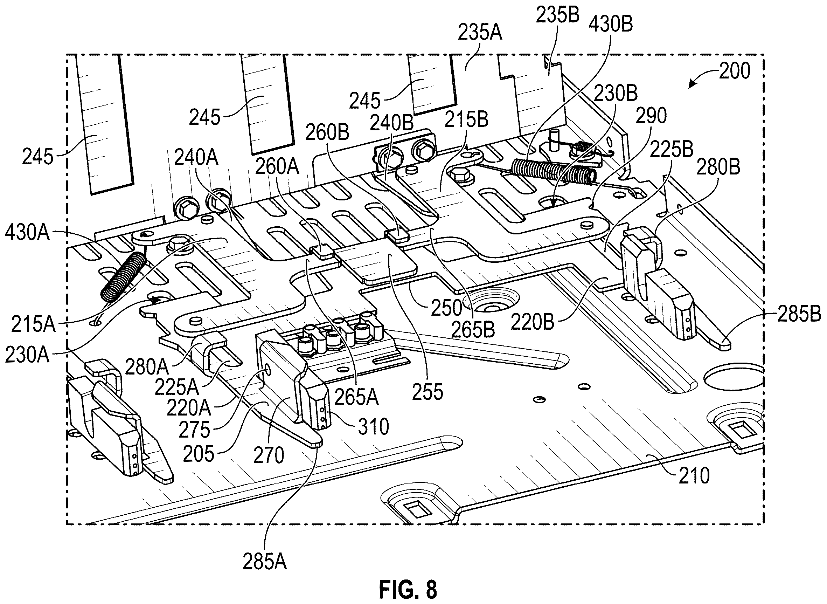

FIG. 6 is a schematic diagram of a shutter assembly 200 according to an exemplary embodiment of the disclosed concept. FIG. 7 is a schematic diagram of a slider 205 according to a first exemplary embodiment that is a part of the shutter assembly 200. FIG. 8 is a schematic diagram showing shutter assembly 200 coupled to a cassette 210. Referring to FIGS. 6-8, shutter assembly 200 includes slider 205, a first arm 215A and a second arm 215B, and a shutter plate 235A and a shutter plate 235B. First and second arms 215A and 215 B each generally have a C-shape that includes a first portion that extends laterally and a second portion that extends perpendicularly form the first portion. In addition, a middle protruding member 265A, 265B extends laterally and perpendicularly from the second portion. First arm 215A has a proximal end that is pivotably and slidably coupled to a first side 220A of slider 205 within a guide slot 225A such that first arm 215A is able to pivot relative to and slide relative to slider 205, and second arm 215B has a proximal end that is pivotably and slidably coupled to a second side 220B of slider 205 within a guide slot 225B such that second arm 215B is able to pivot relative to and slide relative to slider 205. In addition, as seen in FIG. 8, first side 220A of slider 205 and the proximal end of first arm 215A are also coupled to the bottom surface of cassette 210 within a guide slot 230A. Similarly, second side 220B of slider 205 and the proximal end of second arm 215B are also coupled to the bottom surface of cassette 210 within a guide slot 230B. As a result, slider 205 and first and second arms 215A, 215B are able to slide relative to the bottom of cassette 210.

The distal end of first arm 215A is pivotably coupled to a plate 240A which is slidably coupled to the bottom surface of cassette 210 within an L-shaped guide slot provided in cassette 210. This allows plate 240A to move both laterally and longitudinally with respect to the bottom surface of cassette 210. Similarly, the distal end of second arm 215B is pivotably coupled to a plate 240B which is slidably coupled to the bottom surface of cassette 210 within an L-shaped guide slot provided in cassette 210. This allows plate 240B to move both laterally and longitudinally with respect to the bottom surface of cassette 210.

As seen in FIGS. 6 and 8, first shutter plate 235A is connected to plate 240A and second shutter plate 235B is connected to the distal end of plate 240B. First shutter plate 235A is positioned in front of second shutter plate 235B such that each is able to slide relative to one another laterally relative to cassette 210. In addition, both first shutter plate 235A and second shutter plate 235B include a plurality of apertures 245. Apertures 245 are configured such that they are aligned with one another, and thus will block the terminal stabs of cassette 210, when shutter assembly 200 is in a closed condition as described herein, and such that they are aligned with one another and with the positions of the terminal stabs as a result of the sliding of shutter plates 235A, 235B when shutter assembly 200 is moved to an open condition as described herein. In addition, as described in more detail herein, shutter assembly 200 is structured and configured such that when going from the from the closed condition to the open condition, shutter plates 235A and 235B will move toward the terminal stabs of cassette 210 such that the terminal stabs will be received through the aligned apertures 245.

Referring to FIG. 7, slider 205 according to the exemplary embodiment of the disclosed concept includes a middle section between first side 220A and second side 220B thereof. Middle section 250 includes a raised block member 255 and upwardly extending first and second tab members 260A and 260B. Raised block member 255 is structured to engage middle protruding member 265A,265B of arms 215A, 215B, respectively, as shown in FIGS. 6 and 8, which prevents the movement of arms 215A and 215B in the locked condition described herein. This helps to prevent the opening of shutter plates 235A and 235B in the locked condition. In addition, middle protruding member 265A and 265B are, in the closed condition, received under tab members 260A and 260B, respectively, to prevent arms 215A, 215B from lifting upward. This also prevents the opening of shutters shutter plates 235A and 235B in the locked condition described herein. Slider 205 further includes an L-shaped upwardly and laterally extending flap member 270 on first side 220A. A hole 275 is provided in the upwardly extending leg of flap member 270. As described elsewhere herein, flap member 270 is structured to, in conjunction with a levering block 310 that is provided on the bottom surface of cassette 210 (and is used as part of the racking in process for a drawout breaker), enable the locking of shutter assembly 200 with a padlock when shutter assembly 200 is in the closed condition. Furthermore, engagement members 280A and 280B are provided on first and second sides 220A, 220B of arms 215A, 215B, and are structured to be engaged by a drawout breaker when the drawout breaker is being racked in to move slider 205 longitudinally along cassette 210 as described herein. The bottom end of each of first side 220A of slider 205 and second side 220B of slider 205 is provided with respective extension members 285A, 285B, which prevents the drawout breaker from coming to the disconnect position when a padlock is applied. Finally, slider 205 is provided with a slot 290 for engaging a latch member 315 of a latching mechanism. Latching mechanism, various alternative embodiments of which are described herein, is structured to enable shutter assembly 200 to be latched in a condition wherein shutter assembly 200 is open and the cassette terminals are visible and received through apertures 245 of shutter plates 235A and 235B.

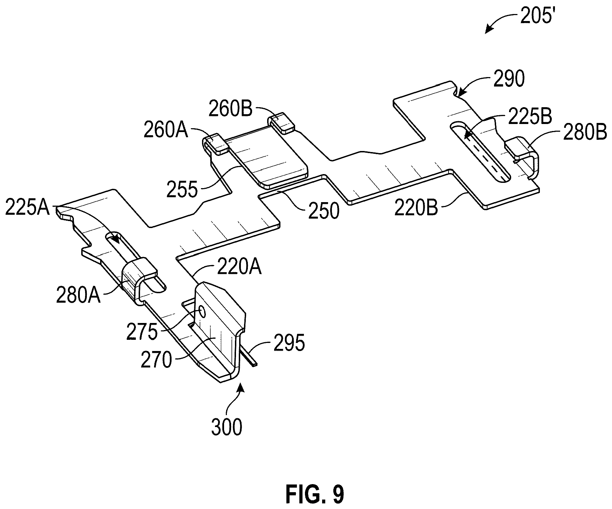

FIG. 9 is a schematic diagram of a slider 205' according to a second exemplary embodiment that may be a part of shutter assembly 200 in place of slider 205 shown in FIG. 7. Slider 205' is similar to slider 205, and like components are labeled with like reference numerals. Slider 205', however, does not include extension members 285A and 285B. In addition, slider 205' includes a smaller extension 295 that creates a slot 300 for receiving levering block 310 for enabling the locking of shutter assembly 200 with a padlock when shutter assembly 200 is in the closed condition. In all other respects, the function and operation of slider 205' is the same as the function and operation of slider 205 and they may be used interchangeably to implement shutter assembly 200 as described herein.

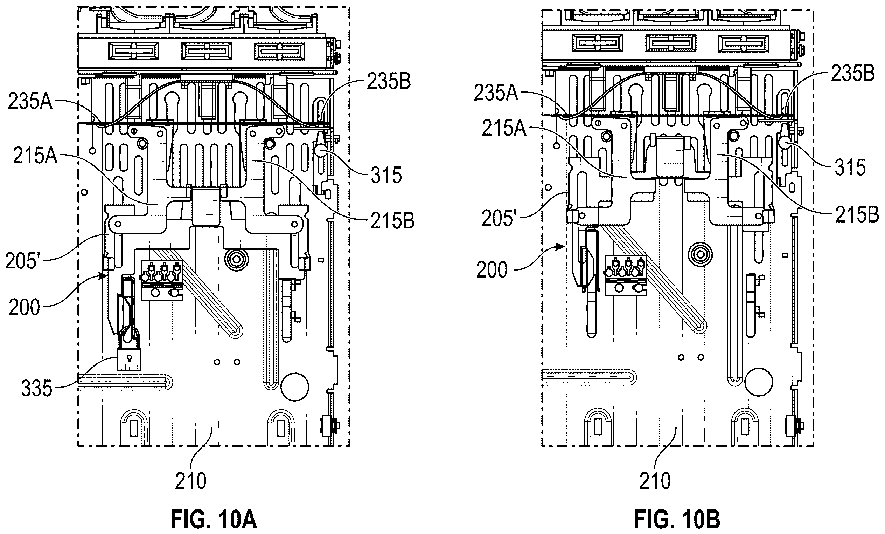

Shutter assembly 200 as described herein is structured and configured to be movable between a number of different positions. Those positions are shown in FIGS. 10A-10D, which, for illustrative purposes, depict shutter assembly 200 as being implemented with slider 205' as just described. It will be understood, however, that the same functionality applies equally to a shutter assembly 200 implemented with slider 205.

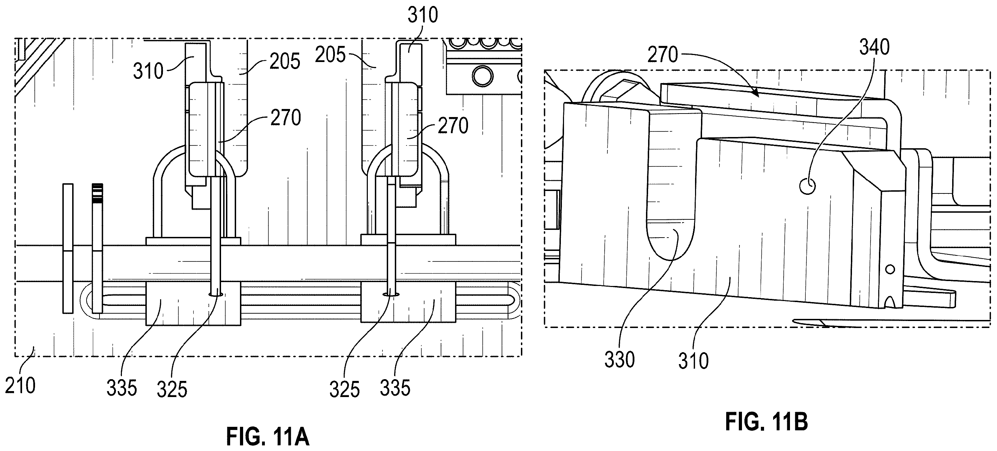

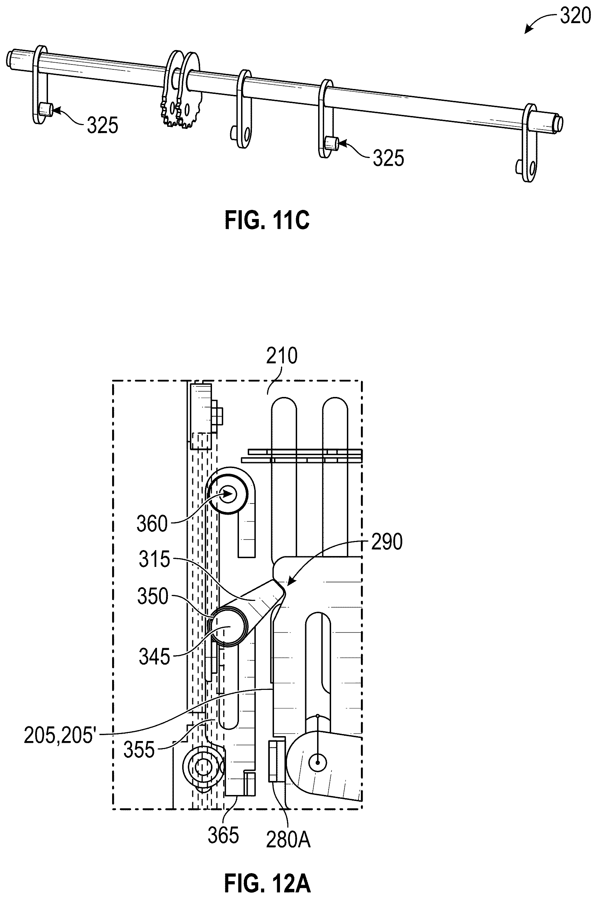

The first position is shown in FIG. 10A. In that position, shutter assembly 200 is closed and locked (described below), the terminal stabs are covered, and shutter assembly 200 is not latched. FIGS. 11A, 11B and 11C illustrate the manner in which shutter assembly 200 may be padlocked when in the first position shown in FIG. 10A. For illustrative purposes, Figs 11A, 11B and 11C show this locking in conjunction with a shutter assembly 200 implemented with slider 205 (FIG. 7), although it will be appreciated that the same functionality is provided where shutter assembly 200 is implemented with slider 205' (FIG. 9). In particular, in this embodiment, the drawout breaker is provided with a claw shaft assembly 320 as shown in FIG. 11C that, in conjunction with levering block 310, facilitates the racking in of the drawout breaker. More specifically, clawshaft assembly 320 includes claw shaft pins 325 that are structured to be received within a slot 330 that is provided in levering block 310. As seen in FIGS. 11A and 11B, when shutter assembly 200 is in the first position, the laterally extending top portion of flap member 270 is aligned with and covers slot 330. In addition, hole 275 provided in the upwardly extending portion of flap member 270 is aligned with a hole 340 provided in levering block 310. As such, the shackle of a padlock 335 is able to be inserted through hole 275 and hole 340 in order to lock shutter assembly 200 in the first position. As a result, shutter assembly 200 cannot be moved forward either manually or by engagement by the drawout breaker. In addition, in this locked condition, since slot 330 is covered, claw shaft pins 325 cannot be received therein to start the racking in process. Also, while the shaft of claw shaft assembly 320 will engage flap member 270, slider 205 cannot be moved forward because of padlock 335. In this condition, the drawout breaker cannot enter the cassette. When padlock 336 is removed, the shaft of claw shaft assembly 320 can engage flap member 270 and move slider 205 forward.

Alternatively, when shutter assembly 200 is in the first position, the laterally extending portion of flap member 270 may be aligned with and cover slot 330 in a manner where hole 275 is also aligned with slot 330. As such, padlock 335 is able to be inserted through hole 275 and slot 330 in order to lock shutter assembly 200 in the first position so that shutter assembly 200 cannot be moved either manually or by engagement by to the drawout breaker.

FIG. 10B shows a second position wherein shutter assembly 200 is closed but unlocked, the terminals are covered, and there is no latching. Shutter assembly 200 moves from the first position to the second position as a result of the drawout breaker or an operator pushing on slider 200 at engagement member 200. When this happens, slider 205' and arms 215A and 215B slide longitudinally along cassette 210 as described herein.

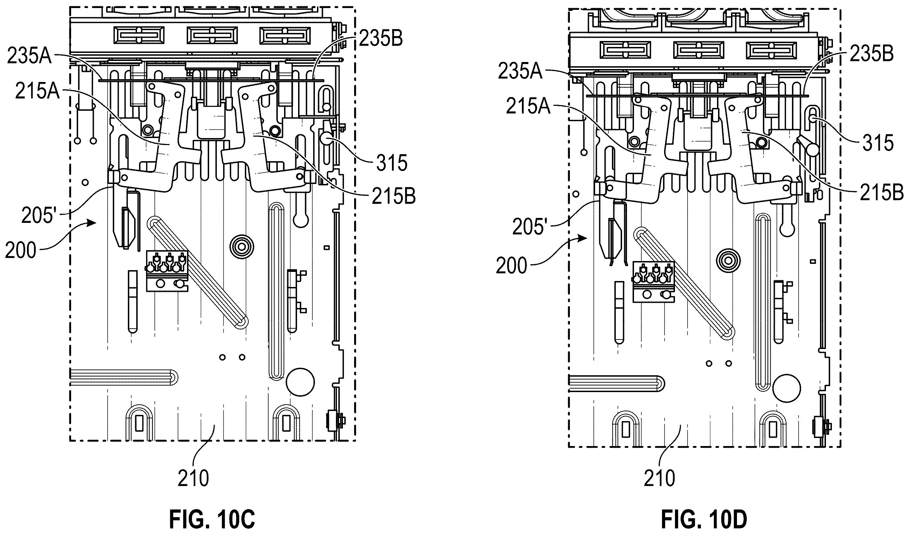

FIG. 10C shows a third position wherein shutter assembly 200 is open and unlocked, the terminals are visible and received through apertures 245, and there is no latching. Shutter assembly 200 moves from the second position to the third position as a result of the drawout breaker or an operator further pushing on slider 205' at engagement member 200. When this happens, slider 205' and arms 215A and 215B move further longitudinally along cassette 210 as described herein and then arms 215A and 215B pivot as described herein, causing plates 240 and 240B to slide laterally, which in turn causes shutter plates 235A and 235B to also slide laterally to a position where aperture 245 are aligned, exposing the terminal stabs. Slider 205' may then be moved, either by the drawout breaker or an operator, to further slide longitudinally along cassette 210 as described herein to a position wherein the terminal stabs are received through apertures 245. As noted above, in this third position, latch member 315 is not engaged.

FIG. 10D shows a fourth position wherein shutter assembly 200 is opened and unlocked, the terminal stabs are received through apertures 245, and shutter assembly 200 is latched in the open position. This is achieved by an operator moving latch member 315 into slot 290 on second side 220B of slider 205'. In this fourth position, the operator is able to perform maintenance and or testing in a hands-free manner because shutter assembly 200 is latched (i.e., held) in place.

Furthermore, as seen in FIG. 8, shutter assembly 200 includes springs 430A and 430B (note springs 430A and 430B are not shown in FIGS 10A-10D for ease of illustration). The first end of each of springs 430A and 430B is connected to cassette 210. The second end of spring 430A is connected to arm 215A (in a hole therein) and the second end of spring 430B is connected to arm 215B (in a hole therein). The function of 430A and 430B is to return slider 205 from the shutter open position (FIG. 10D) to the shutter closed position (FIG. 10D). As a result, when the drawout breaker is racked into the cassette, it will push slider 205 inside the cassette and the shutter plates 235 will open (FIG. 10D). When the drawout breaker is racked out, the shutter plates 235 will close properly to cover the cassette terminals as a result of the force the force on arms 215A and 215B applied by springs 430A and 430B, which will be transferred to slider 205 causing slider 205 to get back to its original position (FIG. 10 D). The latching mechanism described elsewhere herein comes into picture to latch slider 205 in the shutters open position (FIG. 10D) against both the spring forces. Without the latching mechanism, there may be requirement of two operators, one that holds slider 205 in the shutters open position (FIG. 10D) and another that will perform necessary operations on the cassette terminals. However, by adding the latching mechanism as described herein, a single operator can do the same activity easily.

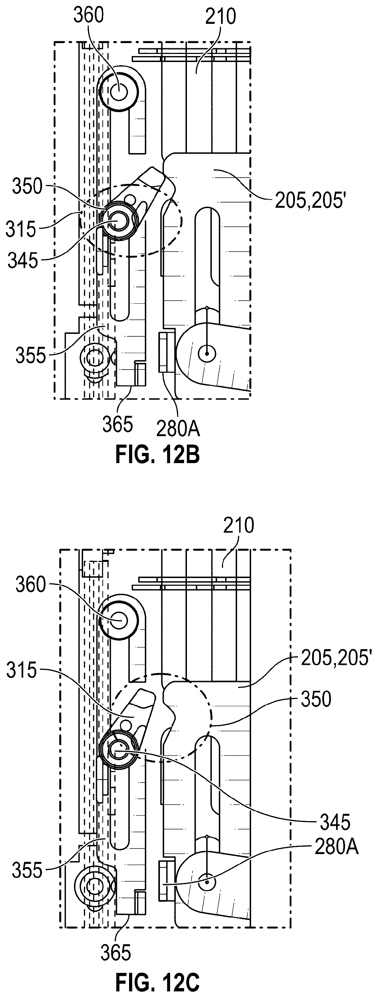

As noted elsewhere herein, the disclosed concept contemplates a number of different latch mechanism embodiments. A first latch mechanism embodiment is shown in FIGS. 12A through 12C (and also in FIGS, 10A through 10D ). FIGS. 12A through 12 C show the latch mechanism of that embodiment in a latched condition, an intermittent condition, and a de-latched condition. In this embodiment, the latch mechanism includes latch member 315 comprising a latch link coupled a latch link pin 345 that is rotatably coupled to cassette 210. Latch member 315 is coupled to latch link pin 345 by a torsional spring 350. In addition, this embodiment includes a latch actuator 355 that includes a C-shaped body through which latch member 315 extends. A latch actuator stopper 360 is connected to cassette 210 and is positioned at the top end of latch actuator 355. As seen in FIGS. 12A through 12C, when slider 205 is moved to the position shown in FIG. 12A, latch member 315 will be received within slot 290, thereby latching and holding shutter assembly 200 in that position. As shown in FIGS. 12B and 12C, in order to de-latch shutter assembly 200, an operating force is applied to the bottom 365 of latch actuator 355 in the direction of the arrow shown in FIGS, 12B and 12C either manually or through the racking in and out of the drawout breaker.

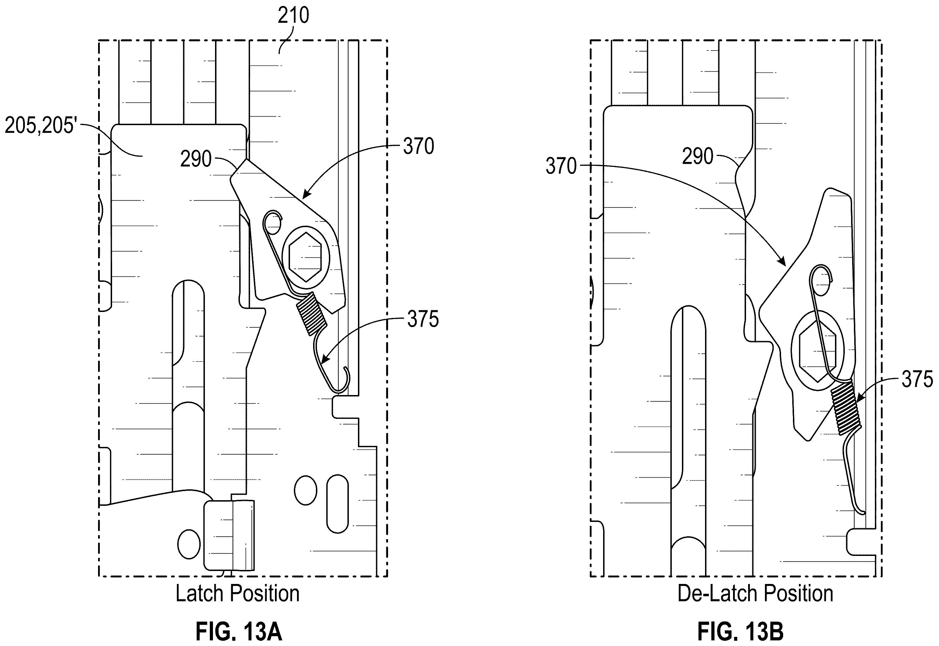

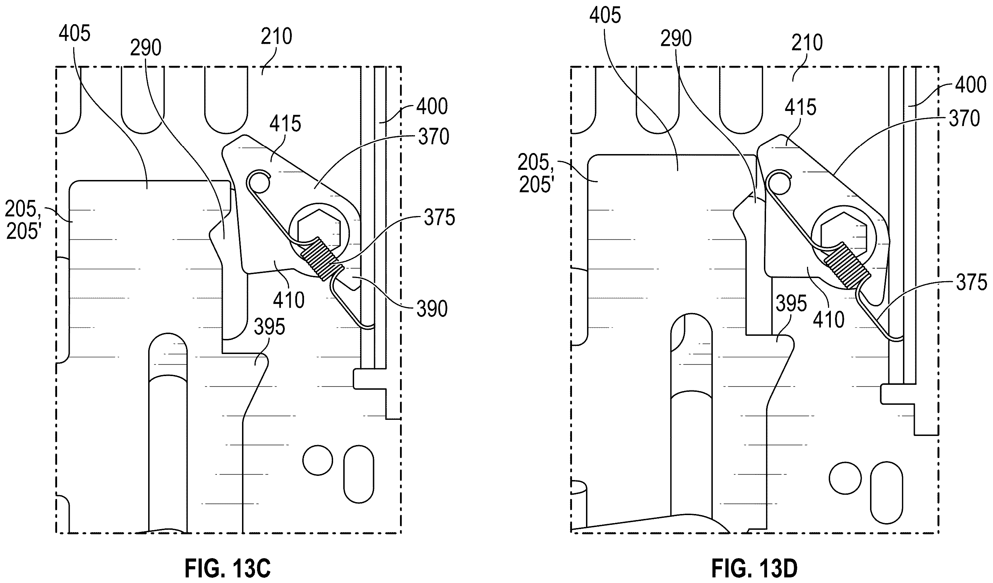

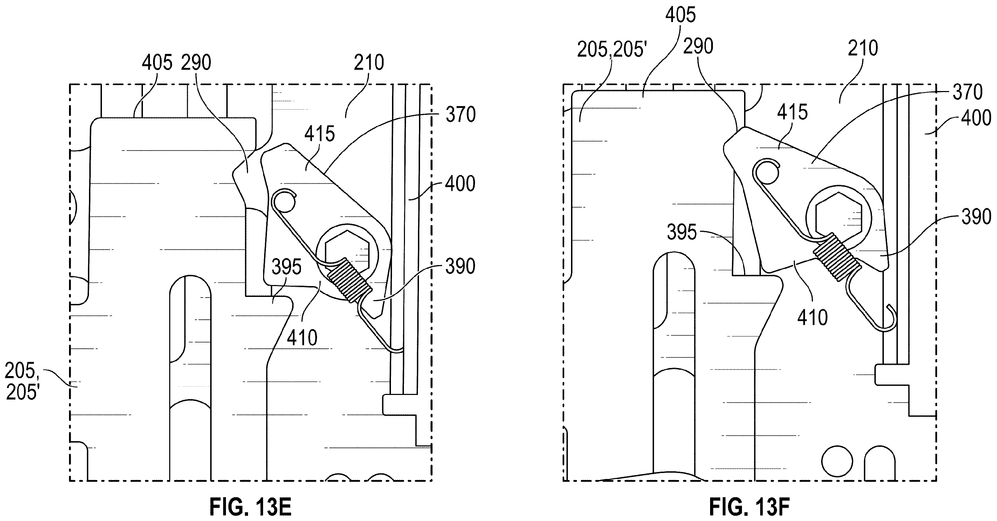

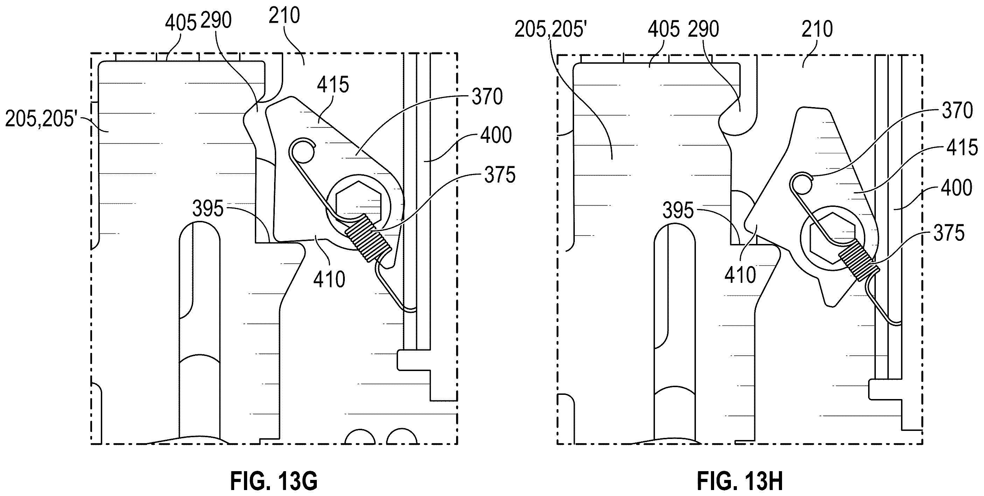

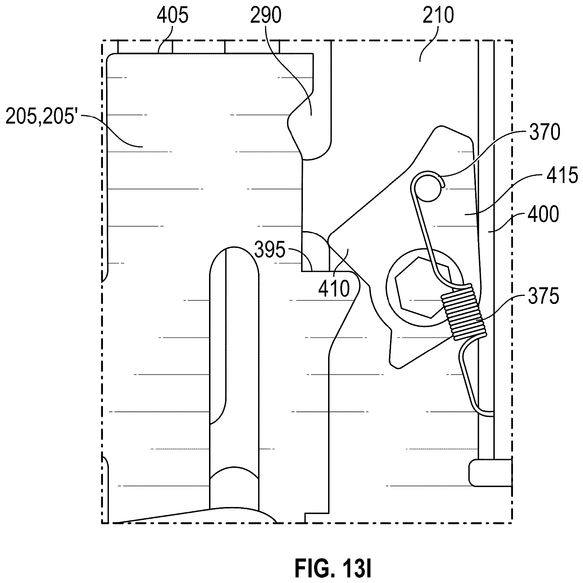

FIGS. 13A and 13B show a second latch mechanism embodiment (also shown in FIG. 8) in a latched and de-latched condition, respectively. In this embodiment, the latch mechanism includes a latch member 370 that is rotatably coupled to cassette 210. This embodiment further includes a compression spring 375 having a first end coupled to latch member 370 and a second end coupled to cassette 210. Referring to FIGS. 13C-13F, the latching operation of latch member 370 will be described. When slider 205/205' is in a locked or unlocked condition (see, e.g., FIG. 10A 10B), latch member 370 will be biased in the counterclockwise direction until it is stopped because of edge 390 of latch member 370 resting against sidewall 400 of cassette 210. When slider 205/205' is pushed towards the cassette terminals, top edge 405 of slider 205/205' will push the latch member 370 in a clockwise direction. After some movement of slider 205/205', latch member 370 slot 290 in slider 205/205' will align latch member 370 will get trapped slot 290 due to the spring force on latch 370 member 370. Referring to FIGS. 13G-13I, the de-latching operation of latch member 370 will be described. For de-latching, slider 205/205' is pushed so that edge 395 of the slider 205/205' will push edge 410 of latch member 370, causing it to rotate in clockwise direction until edge 415 of latch member 370 rests on sidewall 400 of cassette 210. Latch member 310 will stay in this position on cassette wall 400 because of the spring force of spring 375. (here also we can say that the de-latching operation is done automatically)

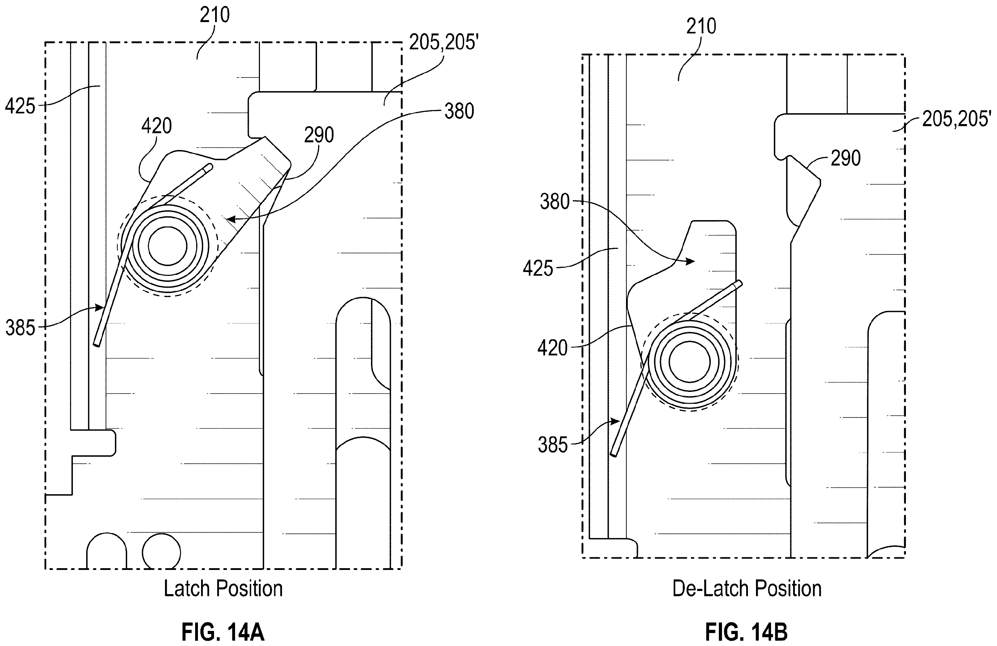

FIGS. 14A and 14B show a third latch mechanism embodiment in a latched and de-latched condition, respectively. In this embodiment, the latch mechanism includes a latch member 380 that is rotatably coupled to cassette 210. This embodiment further includes a torsional spring 385. As seen in FIGS. 14A and 14B, the midpoint of torsional spring 385 is coupled to latch member 380 and the ends of torsional spring 385 are coupled to cassette 210 and latch member 380. As a result, the tendency of spring 385 and latch member 380 will be to rotate in the counterclockwise direction. When slider 205/205' is in a locked or unlocked condition (see, e.g., FIG. 10A 10B), latch member 380 will be in the position as shown in FIG. 14B in which the edge 420 of latch member 380 will rest on wall 425 of cassette 210 as a result of the force of spring 385 (which biases latch member 380 in the counterclockwise direction). Once slider 205/205' is pushed towards the cassette terminals, latch member 380 is manually rotated (against the spring force) so that it is trapped in slot 290 of slider 205/205' as shown in FIG. 14A. Latch member 380 will not come out from slot 290 because slider 205/205' will apply a force in the downward direction because of springs 420A and 430B (FIG .8). For de-latching, slider 205/205' is pushed upward, after which latch member 380 will rotate in the counterclockwise direction and it will come to position as shown in FIG. 14B.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

## Claims

1. A shutter assembly for a drawout circuit breaker assembly including a drawout breaker and a cassette having a number of terminals, comprising;
a slider coupled to the cassette and having a first side and a second side, wherein the slider is slidable in a first direction relative to the cassette;
a first arm coupled to the first side of the slider and the cassette and being independently slidable in the first direction relative to the slider and the cassette and pivotable relative to the slider and the cassette;
a second arm coupled to the second side of the slider and the cassette and being independently slidable in the first direction relative to the slider and the cassette and pivotable relative to the slider and the cassette;
a first shutter plate having a plurality of first apertures coupled to the first arm such that the first shutter plate is independently movable in the first direction and a second direction transverse to the first direction responsive to movement of either or both of the slider and the first arm; and
a second shutter plate having a plurality of second apertures coupled to the second arm such that the second shutter plate is independently movable in the first direction and the second direction responsive to movement of either or both of the slider and the second arm;
wherein the first shutter plate and the second shutter plate are movable between a closed condition wherein the first apertures and the second apertures are not aligned with one another and an open condition wherein the first apertures and the second apertures are aligned with one another and the number of terminals; and
wherein the first side of the slider includes a locking portion structured to enable the slider to be padlocked to a member extending from the top surface of the cassette.

2. The shutter assembly according to claim 1, wherein:
the first arm has a first distal end and a first proximal end, the first distal end being coupled to the first side of the slider and the cassette in a manner wherein the first distal end is independently slidable in the first direction relative to the first side of the slider and the cassette and is pivotable relative to the first side of the slider and the cassette about a first axis normal to a top surface of the cassette, the first proximal end being coupled to the cassette in a manner wherein the first proximal end is slidable in the first direction relative to the cassette and in the second direction relative to the cassette and is pivotable relative to the cassette about a second axis normal to the top surface of the cassette;
the second arm has a second distal end and a second proximal end, the second distal end being coupled to the second side of the slider and the cassette in a manner wherein the second distal end is independently slidable in the first direction relative to the second side of the slider and the cassette and is pivotable relative to the second side of the slider and the cassette about a third axis normal to the top surface of the cassette, the second proximal end being coupled to the cassette in a manner wherein the second proximal end is slidable in the first direction relative to the cassette and in the second direction relative to the cassette and is pivotable relative to the cassette about a fourth axis normal to the top surface of the cassette; and
wherein the first shutter plate is coupled to the first proximal and the second shutter plate is coupled to the second proximal end.

3. The shutter assembly according to claim 1, wherein the member extending from the top surface of the cassette comprises a levering block for facilitating racking of the drawout breaker into the cassette, the levering block having a slot for receiving a claw shaft pin, and wherein the locking portion comprises a flap member having a leg portion extending upwardly from cassette having a hole for receiving a shackle of the padlock and a flap portion extending transversely to the leg portion structured to cover for covering the slot when the first shutter plate and the second shutter plate are in the closed condition.

4. The shutter assembly according to claim 3, wherein the hole of the leg portion is aligned with the slot when the first shutter plates and the second shutter plate are in the closed condition such that the shackle is able to be received through the slot.

5. The shutter assembly according to claim 3, wherein the levering block includes a second hole, wherein the hole of the leg portion is aligned with the second when the first shutter plates and the second shutter plate are in the closed condition such that the shackle is able to be received through the second.

6. The shutter assembly according to claim 2, wherein the first arm includes a first protruding member positioned between the first proximal end and the first distal end, wherein the second arm includes a second protruding member positioned between the second proximal end and the second distal end, and wherein the slider includes a middle portion having a raised block structured to engage the first and second protruding members.

7. The shutter assembly according to claim 2, wherein the first arm includes a first protruding member positioned between the first proximal end and the first distal end, wherein the second arm includes a second protruding member positioned between the second proximal end and the second distal end, and wherein the slider includes a middle portion having a first tab member and a second tab member, wherein the first protruding member is received under the first tab and the second protruding member is received under the second tab.

8. The shutter assembly according to claim 2, wherein the first side of the slider includes a first slot and the second side of the slider includes a second slot, and wherein the first proximal end is structured to slide within the first slot and the second proximal end is structured to slide within the second slot.

9. The shutter assembly according to claim 8, wherein the first slot is provided in a first portion of the first side of the slider, the first portion having a first width, wherein the first side further includes a first extension member having a second width less than the first width, the first extension member extending away from the first portion of the first side and including the locking portion, and wherein the second slot is provided in a first portion of the second side of the slider, the first portion of the second side having the third width, wherein the second side further includes a second extension member having the fourth width less than the third width, the second extension member extending away from the first portion of the second side.

10. The shutter assembly according to claim 2, wherein the first side of the slider includes a first upwardly the extending engagement member structured to engage the drawout breaker and the second side of the slider includes a second upwardly extending engagement member structured to engage the drawout breaker.

11. The shutter assembly according to claim 1, further comprising a latching mechanism coupled to the cassette, wherein either the first side or the second side of the slider includes a slot for receiving a latch member of the latching mechanism to latch the shutter assembly in place.

12. The shutter assembly according to claim 11, wherein the latching mechanism includes a C-shaped latch actuator coupled to the cassette, wherein the latch member includes a rotatable latch link extending through an opening provided in the latch actuator, and wherein the latching mechanism includes a latch link pin coupled to the cassette and a torsional spring coupled to the latch link pin and the latch link.

13. The shutter assembly according to claim 11, wherein the latch member is rotatable relative to the cassette, and wherein the latching mechanism includes a compression spring coupled to the latch member and the cassette.

14. The shutter assembly according to claim 11, wherein the latch member is rotatable relative to the cassette, and wherein the latching mechanism includes a torsional spring coupled to the latch member and the cassette.

15. The shutter assembly according to claim 2, wherein the first distal end is coupled to the first shutter plate through a first plate member and the second distal end is coupled to the second shutter plate through a second plate member.
